# EUROPEAN PATENT APPLICATION

(11) **EP 2 333 131 A1**
(43) Date of publication of application: **15.06.2011**
(21) Application number: 09809813.0
(22) Date of filing: 19.08.2009
(51) Int. Cl.: C22C 29/08, B22F 9/22

(54) **TRANSITION METAL-INCLUDED TUNGSTEN CARBIDE, TUNGSTEN CARBIDE DIFFUSED CEMENTED CARBIDE, AND PROCESS FOR PRODUCING SAME**

(30) Priority: 25.08.2008 JP 2008215606
(71) Applicant: Sanalloy Industry Co., Ltd., Kanzaki-gun, Hyogo 679-2216 (JP); Morishita, Masao, Himeji-shi, Hyogo 671-2201 (JP)
(72) Inventor: MORISHITA, Masao, Himeji-shi Hyogo 671-2201 (JP); YAMAMOTO, Hiroaki, Himeji-shi Hyogo 671-2203 (JP); IKEBE, Masaaki, Kanzaki-gun Hyogo 679-2216 (JP); IWASAKI, Masahiro, Kanzaki-gun Hyogo 679-2216 (JP); YANAGITA, Hidefumi, Kanzaki-gun Hyogo 679-2216 (JP); NISHIMAKI, Hiroshi, Kanzaki-gun Hyogo 679-2216 (JP)
(74) Representative: Sielewiesiuk, Jakub
(86) International application number: PCT/JP2009/064495
(87) International publication number: WO 2010/024160

(57) **Abstract**

This invention is related to a powder of a transition metal dissolved tungsten alloy carbide which comprises a transiti on metal element forcibly dissolved as a solid solution whi ch represented by Formula [1] of M-W-C wherein M is one or m ore of Co, Fe, Ni and Mn and its tungsten alloy carbide diff used cemented carbide.

The diffused cemented carbide is compatible with the conven tional tungsten carbide diffused cemented carbide and compr ises a binder metal and a tungsten alloy carbide which is pr ovided with a solid solution phase of at least one transitio n metal element selected from the group consisting of cobal t, iron, nickel and manganese, included in a tungsten carbi de skeleton, which exhibits a peak derived from a bcc tungst en phase in an X-ray diffraction diagram.

## Description

### Technical Field

The present invention relates to a transition metal included tungsten carbide, tungsten carbide diffused cement ed carbide and a process for producing the same.

### Background Art

Tungsten has a high melting point and modulus of elasticity and is useful as a filament material or a raw material for tungsten carbide (WC). However, the price of tungsten is showing a tendency to increase sharply in accordance with a rapid increase in the domestic demand of China, since the raw material thereof is present only in China. In order to develop materials capable of conserving tungsten resources, there is a need to replace a portion of tungsten with a transition metal element.

However, it is difficult to prepare tungsten parts by melt-casting due to the high melting point thereof. Further, in spite of using powder metallurgy for imparting a form to the powder material,
there is a problem in that alloying effect is not performed in a blended elemental method of a tungsten powder and a transition metal element. In addition, an atomization method is difficult to be applied to the tungsten for preparing an alloy powder.

Meanwhile, it has been known a conventional method for preparing a tungsten alloy powder by co-precipitating a metal salt or metal hydroxide (Japanese Patent Publicati on 1 and 2).

[Japanese Patent Publication 1] PCT International Pat ent Publication No. 2002-527626
[Patent Publication 2]: US Patent No. 4913731

### Summary of Invention

### Technical Problem to be solved

However, in the preparation methods disclosed in Patent Publication 1 and 2, due to the operation of "coprecipitation", a resulting alloy powder comes to contain a phase of a transition metal element, in addition to a tungsten phase and a tungsten phase alloyed with a transition metal element, it shows that alloying is not sufficiently performed.

On the other hand, a cemented carbide made of tungsten carbide (WC) having a quite high toughness and alloying with cobalt (Co) is useful for cutting tools and molds, so a lot of cemented carbide is necessary to automobile and electric industries. However, due to mal-distribution of tungsten in China and rapid increasing domestic demand in China, tungsten material cost is escalating. Therefore, we should cut down the used amount of tungsten and cemented carbide de mand necessary for the industries should be self-contained in order to sustain industry activity in Japan.

To solve the problem, an object of the present invention is to provide a novel tungsten carbide necessary for a cemented carbide material by using a tungsten alloy powder and also to provide a cemented carbide.

### Solution to Problem

As a result of a variety of extensive and intensive studies to accomplish the object, the present inventors discovered that when tungsten ions and ions of transition metal are homogenized at an ionic level in an aqueous solution, subjected to drying by distillation or spray-drying, thermal decomposition and then hydrogen thermal re duction to obtain a tungsten powder. The tungsten alloy powder in which a transition metal element is thoroughly compulsorily dissolved as a solid solution can be prepared , and it has been found that the tungsten alloy powder can be used for an alternate new tungsten carbide and an alteenate new cemented carbide, thus accomplished the present invention.

That is, the present invention provides a tungsten alloy carbide powder represented by Formula [1] which is carbonized from a tungsten alloy powder with a transition metal dissolved therein as a solid solution represented by Formula [2]
in which at least one transition metal element selected from the group consisting of cobalt, iron, manganese and n ickel is dissolved in a tungsten grating and a peak derived from a bcc tungsten phase appears in an X-ray diffraction diagram.

Formula [1]: M-W-C

wherein M represents one or more selected from Co, Fe, Mn and Ni.

Formula [2]: M-W

wherein M represents one or more selected from Co, Fe, Mn and Ni.

The tungsten alloy powder represented by Formula [2] comprises: a transition metal selected from the group consisting of cobalt, iron, nickel and manganese is dissolved in tungsten grating and a peak derived from a bcc tungsten phase appears in an X-ray diffraction diagram which means that any transition metal and any its metal compounds do not exist in the grain boundary of tungsten. Therefore, the inventive tungsten alloy powder can be used as an alternative of the ordinary tungsten. Herein, when the amount of transition metal is less than 0.3% of tungsten alloy powder, we have not any advantage of natural resource saving. On the other hand, when the amount of transition metal is more than 20.8 wt.% of tungsten alloy powder, we have precipitation phenomenon of the second phase in the grain boundary of tungsten and the transition metal is not dissolved as a solid solution in the tungsten grating. In the tungsten alloy powder, cobalt can be located in a position of tungsten grating and acts as a substitute of tungsten Nickel is cheaper than Cobalt and acts in a same manner of cobalt. Iron and Manganese are cheaper elements and improve the strength of tungsten alloy powder in a same manner.

The transition metal can be dissolved in the tungsten up to the same mole of tungsten. Among them, cobalt and iron are more preferable. In case of cobalt, it is preferable that cobalt of 40 to 10 mole can be dissolved in 60 to 90 mole% of tungsten. In case of the other transition metals, the same ratio can be applicable.

A part of cobalt can be substituted by one or more elements selected from the group consisting of iron, nickel and manganese, to obtain a complex transition metal dissolved tungsten alloy powder.

The present invention transition metal included tungsten carbide represented by the Formula [1] can be exemplified by Co-W-C/WC. In this case, a preferred composition is Co: 0.3 - 19.7 wt%, W: 75.3 -93.6 wt%, C:4.9 - 6.2 wt% and a solid solution phase of Co-W-C is included therein, in which all or a part of cobalt can be substituted by one or more sel ected from the group consisting of iron, manganese and nickel. In case of Co substituted by Fe, it is exemplified by Fe-W-C/WC.
In this case, a preferred composition is Fe:0.3 - 19.7 wt%, W: 75. 3 -93.6 wt%, C:4.9 - 6.2 wt% and a solid solution phase of Fe-W-C is included therein, in which all or a part of iron can be substituted by one or more selected from the group consisting of cobalt, manganese and nickel. Among them, Fe-Mn-W-C (Fe partially substituted by manganese) is preferable.
In case of Co substituted by Ni, it is exemplified by Ni-W-C /WC. In this case, a preferred composition is Ni:0.3 - 19.7 wt%, W: 75.3 -93.6 wt%, C:4.9 - 6.2 wt% and a solid solution phase of Ni-W-C is included therein, in which a part of nickel can be substituted by one or more selected from the group consisting of iron, cobalt, and manganese. In case of Co substituted by Mn, it is exemplified by Mn-W-C/WC.
In this case, a preferred composition is Mn:0.3 - 19.7 wt%, W: 75.3 -93.6 wt%, C:4.9 - 6.2 wt% and a solid solution phase of Mn-W-C is included therein, in which a part of manganese can be substituted by one or more selected from th e group consisting of cobalt, iron and nickel.

An another object of the invention is provided a tungsten carbide diffused cemented carbide by a process of sintering the above transition metal included tungsten carbide with the transition metal.
That is, it is to provide a tungsten carbide diffused cemented carbide by sinter a tungsten alloy carbide powder represented by Formula [1] which is carbonized from a tungsten alloy powder with a transition metal dissolved therein as a solid solution represented by Formula [2] in which at least one transition metal element selected from the group consisting of cobalt, iron, manganese and nickel is dissolved in a tungsten grating and a peak deriv ed from a bcc tungsten phase appears in an X-ray diffraction diagram.

Formula [1]: M-W-C

wherein M represents one or more selected from Co, Fe, Mn and Ni.

Formula [2]: M-W

wherein M represents one or more selected from Co, Fe, Mn and Ni.
Among them, a tungsten carbide diffused cemented carbide can be exemplified by combination of: Co-W-C as transition metal included tungsten carbide and Co as a combined transition metal; Fe-W-C as transition metal included tungsten carbide and Co as a combined transition metal; Ni-W-C as transition metal included tungsten carbide and Co as a combined transition metal; Mn-W-C as transition metal included tungsten carbide and Co as a combined transition metal. In the above cases, cobalt used in the transition metal included tungsten carbide and the combined transition metal can be totally or partially substituted by one or more elements selected from the group consisting of nickel, iron and manganese.

### Advantageous Effects

The tungsten alloy carbide obtained by the present invention maintains a WC-structure(skeleton) and contains a transition metal element dissolved as a solid solution in a tungsten grating, so that the tungsten alloy carbide can provide a novel tungsten carbide diffused cemented carbide having substantially the same properties as those made of the conventional tungsten carbide.

According to the present invention, there can be provided a tungsten carbide diffused cemented carbide made of Co-W-C as a transition metal included tungsten carbide and Co as a t ransition metal powder, a preferred composition of which is Co:1.2 - 31.7wt%, W: 64.0 -92.7 t%, C:4.2 - 6.1wit%. In this case, cobalt of Co-W-C can be partially substituted by one or more elements selected from the group consisting of iron, nickel and manganese, by which there is provided the other p referred composition of Co:0.2 - 12.0wt%, Fe:0.3 - 19.7wt%, W: 64.0 -92.7wt%, C:4.2 - 6.1wt% in case of Fe-W-C as a transition metal included tungsten carbide and Co as a transition metal powder; Co:0.9 - 12.0wt%, Ni:0.3 - 19.7wt%, W: 64.0 -92.7wt%, C:4.2 - 6.1wt% in case of Ni-W-C as a transition metal included tungsten carbide and Co as a tran sition metal powder; Co:0.9 - 12.0wit%, Mn:0.3 - 19.7wt%, W: 64.0 -92.7wt%, C:4.2 - 6.1wt% in case of Mn-W-C as a transition metal included tungsten carbide and Co as a transition metal powder. The transition metal Co powder ca n be totally or partially substituted by one or more selecte d from the group consisting of Ni, Fe and Mn, each of the substituted compositions resulting in the same effect in case of Co.

The transition metal included tungsten carbide represented by Formula [1] can be produced by 1) mixing an aqueous solution containing tungsten ions with an aqueous solution containing at least ions of one transition metal selected from the group consisting of cobalt, iron, manganese and nickel, wherein the mixing is performed such that the tungsten ions are 60 mol% or more and the transition metal ions are 40 mol% or less, drying the mixed aqueous solution by distillation or spraying, thermally decomposing the resulting solid, followed by hydrogen thermal reduction, to prepare a transition metal-dissolved tungsten alloy powder represented by Formula [2], 2) carbonizing the resulting oxide powder or transition metal-dissolved tungsten alloy powder by heating with graphite to be mixed or gas-carburizing.

In the present invention, preferably, the aqueous solution containing tungsten ions is an ammonium paratungstate aqueous solution (5(NH4)₂O·12WO₃·5H₂O). The aqueous solution containing ions at least one transition metal selected from the group consisting of cobalt, iron, manganese and nickel is a transition metal complex salt aqueous solution. Examples of useful transition metal complex salts include acetates (Fe(OH)(C₂H₃OO)₂, Co(C₂H₃O₃)₂·4H₂O, Mn(CH₃COO)₂·4H₂O, and Ni(C₂H₃O₃)₂·xH₂O), which are soluble in water, do not produce harmful materials and low in environmental load. In addition, use of transition metal sulfates of iron, nickel and cobalt can be exemplified by such as CoSO₄·7H₂O, FeSO₄·7H₂O, andNiSO₄·6H₂O which are effective in realizing circulation society.

1 Generally, in an electrolytic refining process of copper, the transition metals of iron, nickel and cobalt are concentrated in sulfate in an electrolyte. Accordingly, waste liquid produced during the electrolytic refining of copper may be used as a raw material of the tungsten alloy powder of the present invention and the sulfate produced during drying by distillation or spray-drying may be efficiently used as a by-product.

The tungsten alloy carbon diffused cemented carbide obtained from the present invention can be produced from the present invention tungsten alloy carbide by 1) mixing an aqueous solution containing tungsten ions with an aqueo us solution containing at least ions of one transition met al selected from the group consisting of cobalt, iron, man ganese and nickel, wherein the mixing is performed such th at the tungsten ions are 60 mol% or more and the transitio n metal ions are 40 mol% or less, drying the mixed aqueous solution by distillation or spraying, thermally decomposi ng the resulting solid, followed by hydrogen thermal reduc tion, to prepare a transition metal-dissolved tungsten alloy powder represented by Formula [2], 2) carbonizing the resulting oxide powder or transition metal-dissolved tungsten alloy powder by heating it with graphite to be mixed or gas-carburizing, to obtain a transition metal dissolved tungsten carbide and 3) sintering the resulting tungsten carbide with a transition metal powder.

### Description of Embodiments

Hereinafter, the present invention will be described with reference to representative examples. However, it w ill be apparent to those skilled in the art from Examples that the other tungsten carbide can be produced and the other tungsten carbide can be used with a transition metal powder to produce any other tungsten carbide diffused cemen ted carbide.

### Preparation 1

1 A conventional material (No.1), materials of the present invention (Nos. 2 to 8, Nos. 11 to 14) and Comparative materials (Nos. 9 and 10) were prepared to have the chemical components (mol%) shown in Table 1, and the possibility of a compulsive solid solution and the existence of precipitation of the second phase were confirmed by X-ray diffraction and EPMA.

1

**[Table 1]**

| Chemical component (mol%) and formation of compulsive solid solution | | | | | | | | |
|---|---|---|---|---|---|---|---|---|
| No | Fe | Co | Mn | Ni | W | Note | | |
| 1 | - | 20 | - | - | Bal | Conventional material | Powder mixing | Second phase (Co) precipitation |
| 2 | - | 10 | - | - | Bal | Material of the present invention | Solution method | Compulsive solid solution |
| 3 | - | 20 | - | - | Bal | Material of the present invention | Solution method | Compulsive solid solution |
| 4 | - | 30 | - | - | Bal | Material of the present invention | Solution method | Compulsive solid solution |
| 5 | - | 40 | - | - | Bal | Material of the present invention | Solution method | Compulsive solid solution |
| 6 | 10 | 10 | - | - | Bal | Material of the present invention | Solution method | Compulsive solid solution |
| | | | | | | | | |
| 7 | - | 10 | - | 10 | Bal | Material of the present invention | Solution method | Compulsive solid solution |
| 8 | 5 | 10 | - | 1.85 | Bal | Material of the present invention | Solution method | Compulsive solid solution |
| 9 | - | 90 | - | - | Bal | Comparative material | Solution method | 2(Co₃W) phase precipitation |
| 10 | - | 50 | - | - | Bal | Comparative material | Solution method | 2 (Co₇W₆) phase precipitation |
| 11 | 0.1 | 19.9 | - | - | Bal | Material of the present invention | Solution method | Compulsive solid solution |
| 12 | 5.0 | 15.0 | - | - | Bal | Material of the present invention | Solution method | Compulsive solid solution |
| 13 | 20 | - | - | - | Bal | Material of the present invention | Solution method | Compulsive solid solution |
| 14 | 17.4 | - | 2.4 | - | Bal | Material of the present invention | Solution method | Compulsive solid solution |

In Table 1, the term "solution method" is a process of the present invention which includes mixing an aqueous solution of transition metal acetate (Co(C₂H₃O₃)₂·4H₂O, Fe(OH)(C₂H₃OO)₂, Mn(CH₃COO)₂·4H₂O and/or Ni(C₂H₃O₃)₂·xH₂O) with an aqueous solution of ammonium paratungstate (5(NH₄)₂O·12WO₃-5H₂O), subjecting the mixture to drying by distillation (or spray drying), thermally decomposing the resulting solid into an oxide under an atmosphere at 823 K, and subjecting the resulting product to hydrogen thermal reduction under a hydrogen gas at 1073 K for lh to obtain a tungsten alloy powder.

Sample No.1 is a conventional material obtained using a blended elemental method, as a conventional powder metallurgy method, including weighing and mixing 7.42% by weight of a pure cobalt powder and the balance of a pure tungsten powder to make the chemical composition of Table 1, followed by compression molding at a pressure of 2 ton/cm², and maintaining for 1 h under a hydrogen gas at 1073 K. A pure cobalt phase remained as the second phase and alloying with tungsten was not performed.

Sample No.2 is a material of the present invention obtained by a solution method. An aqueous solution of transition metal acetate (Co(C₂H₃O₃)₂·4H₂O) was mixed with ammonium paratungstate. In the X-ray diffraction diagram of the resulting alloy powder, only a peak derived from a bcc W phase appeared and a W alloy powder was obtained in which Co was homogenously compulsorily dissolved as a solid solution.

Sample No.3 is a material of the present invention obtained by a solution method. An aqueous solution of a transition metal acetate Co(C₂H₃O₃)₂·4H₂O was mixed with ammonium paratungstate to make the composition 80 mol% W-20 mol% Co. In the X-ray diffraction diagram of the resulting alloy powder, only a peak derived from a bcc W phase appeared and a W alloy powder was obtained in which Co was homogenously compulsorily dissolved as a solid solution. The equilibrium phases of this composition at a hydrogen thermal reduction temperature of 1073 K were a W phase and a Co₇W₆ phase. First, it was confirmed that, when cobalt ions and tungsten ions in an aqueous solution were made homogeneous at an ion level by the solution method, cobalt was captured in a tungsten grating even after the hydrogen thermal reduction and equilibrium phase of C₀₇W₆ could not be formed. That is, it was discovered that, when a solution method is applied, an alloy powder compulsorily dissolved as a solid solution in a non-equilibrium state can be prepared.

Samples No.4 and No.5 are materials of the present invention obtained by a solution method. It was confirmed that a W alloy powder in which Co was homogenously compulsorily dissolved in a non-equilibrium state to make a composition of 60 mol% W - 40 mol% Co could be obtained. When the solution method was applied, compulsorily dissolved alloy powder as a solid solution in a non-equilibrium state could be prepared, without forming an equilibrium phase of Co₇W₆ to make this composition.

Sample No.6 is a material of the present invention obtained by a solution method, in which a Co(C₂H₃O₃)₂·4H₂O aqueous solution is partially substituted by an Fe(OH)(C₂H₃OO)₂ aqueous solution. It was discovered that compulsorily dissolved alloy powder as a solid solution could be prepared, although Co was partially substituted by Fe.

Sample No. 7 is a material of the present invention obtained by a solution method, in which a Co(C₂H₃O₃)₂·4H₂O aqueous solution is partially substituted by an aqueous solution of Ni(C₂H₃O₃)₂·xH₂O. A compulsorily dissolved alloy powder as a solid solution could be prepared, although Co was partially substituted by Ni.

Sample No. 8 is a material of the present invention obtained by a solution method, in which a Co(C₂H₃O₃)₂·4H₂O aqueous solution is partially substituted by an aqueous solution of Fe(OH)(C₂H₃OO)₂ and Ni(C₂H₃O₃)₂·xH₂O. A compulsorily dissolved alloy powder as a solid solution could be prepared, although Co was partially substituted by Fe and Ni.

Sample No. 9 is a Comparative material obtained by the solution method. In this composition of 10 mol% W - 90 mol% Co, an equilibrium phase of Co₃W was finally precipitated as a second phase. Accordingly, when the amount of Co is greater, W atoms are readily diffused in a Co lattice in spite of using a solution method and thus a compulsory solid solution could not be prepared.

Sample No.10 is a Comparative material obtained by a solution method. In this composition of 50 mol% W - 50 mol% Co, the equilibrium phase of Co₇W₆ was finally precipitated as the second phase. Accordingly, W atoms were also diffused in this composition, and a compulsory solid solution could not be thus prepared.

Sample No. 11 is a material of the present invention obtained by a solution method, in which a Co(C₂H₃O₃)₂·4H₂O aqueous solution was partially substituted by an Fe(OH)(C₂H₃OO)₂ aqueous solution. Sample No. 11 is a compulsorily dissolved alloy powder as a solid solution in which Co was partially substituted by a small amount of Fe.

Sample No. 12 is a material of the present invention obtained by a solution method, in which a Co(C₂H₃O₃)₂·4H₂O aqueous solution was partially substituted by an Fe(OH)(C₂H₃OO)₂ aqueous solution. A compulsorily dissolved alloy powder as a solution solid could be prepared, although an Ni(C₂H₃O₃)₂·xH₂O aqueous solution shown in Sample No.8 was not added.

Sample No. 13 is a material of the present invention obtained by a solution method, in which a Co(C₂H₃O₃)₂·4H₂O aqueous solution was entirely substituted by an Fe(OH)(C₂H₃OO)₂ aqueous solution. A compulsorily dissolved alloy powder as a solid solution could be prepared, although Co was entirely substituted by Fe.

Sample No.14 is a material of the present invention obtained by a solution method, in which a Co(C₂H₃O₃)₂·4H₂O aqueous solution was entirely substituted by an Fe(OH)(C₂H₃OO)₂ aqueous solution and a Mn(CH₃COO)₂·4H₂O aqueous solution. A compulsorily dissolved alloy powder as a solid solution could be prepared, although Co was entirely substituted by Fe and Mn.

### [Example 1]

A conventional material (No. 21), materials of the present invention (Nos. 22 to 27, and Nos. 30 to 33) and Comparative materials (Nos. 28 and 29) having chemical components (wt%) shown in Table 2 were prepared and the possibility of a compulsive solid solution and the existence of precipitation of the second phase were confirmed by X-ray diffraction and EPMA.

**[Table 2]**

| Chemical components of tungsten carbide (wt%) and formation of metal phase or second carbide phase in the carbide | | | | | | | | |
|---|---|---|---|---|---|---|---|---|
| No | Fe | Co | Mn | Ni | W | C | Note | |
| 21 | - | - | | - | Bal | 6.13 | Conventional material | X |
| 22 | - | 1.20 | | - | Bal | 6.10 | Material of the present invention | O |
| 23 | - | 7.00 | | - | Bal | 5.70 | Material of the present invention | O |
| 24 | - | 16.71 | | - | Bal | 5.11 | Material of the present invention | O |
| 25 | - | 19.70 | | - | Bal | 4.20 | Material of the present invention | O |
| 26 | 3.32 | 3.50 | | - | Bal | 5.91 | Material of the present invention | O |
| | | | | | | | | |
| 27 | - | 3.50 | | 3.48 | Bal | 5.91 | Material of the present invention | O |
| 28 | - | 19.76 | | - | Bal | 4.19 | Comparative material | X |
| 29 | - | 0.29 | | - | Bal | 6.12 | Comparative material | X |
| 30 | 0.033 | 6.96 | - | - | Bal | 5.70 | Material of the present invention | |
| 31 | 1.66 | 5.25 | - | - | Bal | 5.71 | Material of the present invention | O |
| 32 | 6.65 | - | - | - | Bal | 5.72 | Material of the present invention | O |
| 33 | 5.79 | - | 0.79 | - | Bal | 5.73 | Material of the present invention | O |

| | | | | | | | | |
|---|---|---|---|---|---|---|---|---|
| Metal phase is formed in carbide: O Metal phase is not formed in carbide: X | | | | | | | | |

The materials of the present invention of Nos. 22 to 27 shown in Table 2 were prepared by adding graphite to a tungsten alloy powder in which a transition metal was compulsorily dissolved as a solid solution by a solution method, followed by mixing. That is, a tungsten alloy powder in which a transition metal element was compulsorily dissolved as a solid solution was prepared, by 1) mixing an aqueous solution of transition metal acetate selected from the group consisting of Co(C₂H₃O₃)₂·4H₂O, Fe(OH)(C₂H₃OO)₂, Mn(CH₃COO)₂·4H₂O and/or Ni(C₂H₃O₃)₂·xH₂O) with an aqueous solution of ammonium paratungstate (5(NH₄)₂O·12WO₃·5H₂O), drying by distillation (or spray drying), thermally decomposing the resulting solid with oxide under an atmosphere at 823 K, and performing hydrogen thermal reduction for 1 h under a hydrogen gas at 1073 K.
Then, 2) this tungsten alloy powder was mixed with graphite and was allowed to stand in Ar at 1473 K for 1 h to prepare tungsten carbide.

Sample No. 21 was WC carbide obtained by mixing W0₃ with graphite and carbonizing at 1473 K for 1 h in accordance with a conventional powder metallurgy method. A metal phase was not present in the WC skeleton.

Sample No. 22 to Sample No. 27 are materials of the present invention obtained by 1) a solution method and 2) carbonization. A specific structure in which a metal phase is present in the WC skeleton was obtained. This metal phase contributes to resource saving of tungsten and the improvement of mechanical properties of carbide. It was confirmed that the content of metal phase increases in accordance in the order of Sample No. 22, No. 23, No. 24, No. 25, No.26 and No.27.

Sample No. 26 and Sample No. 27 are carbides in which metal phase cobalt present therein is substituted by iron, iron-manganese and nickel, respectively, to reduce the cost.

Samples Nos. 28 and 29 are Comparative materials obtained by a solution method and carbonization. When the amount of cobalt is greater than that of tungsten as in Sample No. 29, tungsten is diffused in the cobalt in the process of preparing the tungsten alloy powder, to produce an equilibrium phase of Co₃W or Co₇W₆. As a result, when this alloy powder is carbonized, the metal phase surrounds the carbide and the metal phase cannot be thus present in the carbide.

The materials of the present invention of Nos. 30 and 31 shown in Table 2 were prepared by adding graphite to a tungsten alloy powder in which a transition metal is compulsorily dissolved as a solid solution by a solution method, followed by mixing. That is, in the same manner as in Sample 26, a tungsten alloy powder in which a transition metal element is compulsorily dissolved as a solid solution was prepared, by mixing an aqueous transition metal acetate solution (Co(C₂H₃O₃)₂·4H₂O) and an aqueous solution of Fe(OH)(C₂H₃OO)₂ with an aqueous solution of ammonium paratungstate (5(NH₄)₂O·12WO₃·5H₂O), drying by distillation (or spray drying), thermally decomposing the resulting solid into an oxide under an atmosphere at 823 K, and performing hydrogen thermal reduction for 1 h under hydrogen gas at 1073 K. Then, this tungsten alloy powder was mixed with graphite and was allowed to stand in Ar at 1473 K for 1 h to prepare tungsten carbide. A specific structure in which a Co-Fe solid solution phase is present in the WC skeleton was obtained.

The materials of the present invention of Nos. 32 and 33 shown in Table 2 were prepared by adding graphite to a tungsten alloy powder in which Fe and Mn were compulsorily dissolved as a solid solution by a solution method, followed by mixing. That is, the tungsten alloy powder in which a transition metal element is compulsorily dissolved as a solid solution was prepared, by mixing an aqueous solution of (Fe(OH)(C₂H₃OO)₂) and an aqueous solution of Mn(CH₃COO)₂·4H₂O with an aqueous solution of ammonium paratungstate (5(NH₄)₂O·12WO₃·5H₂O), drying by distillation (or spray drying), thermally decomposing the resulting solid into an oxide under an atmosphere at 823 K, and performing hydrogen thermal reduction for 1 h under hydrogen gas at 1073 K. Then, this tungsten alloy powder was mixed with graphite and was allowed to stand in Ar at 1473 K for 1 h to prepare tungsten carbide. When Co is entirely substituted by Fe or Fe and Mn, WC containing a Fe metal or Fe-Mn solid solution could be obtained.

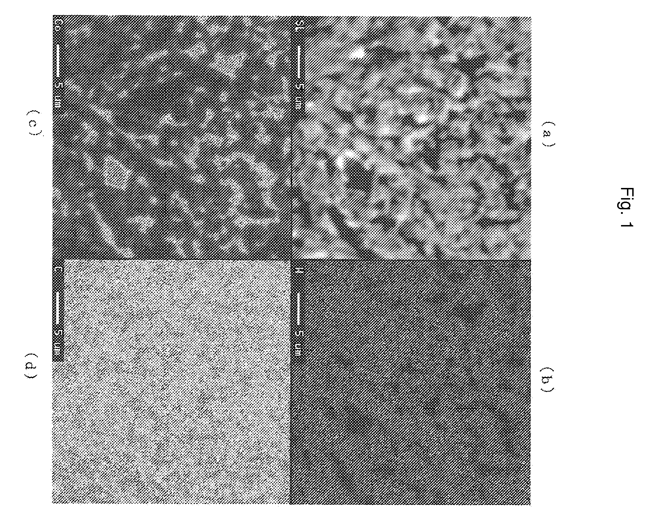

FIG. 1 shows EPMA observation results of the material of the present invention of Sample No. 23. As can be seen from the X-ray image of W and C corresponding to the SEM image, the structure of WC was formed. In addition, it was found from the X-ray image of Co that a metal phase was formed in the structure of WC. That is,
(a) is an SEM image. A white part represents a WC skeleton and a black part represents a domain composed of a Co metal. The Co domain is inevitably grown when sintered at 1623 K at 3.6 ks, but is maintained at 3 mm or less.
(b) represents an X-ray image of W and shows formation of the WC skeleton.
(c) represents an X-ray image of Co and shows formation of the Co domain in a WC skeleton.
(d) represents an X-ray image of C and shows formation of the WC skeleton.
This formation of metal phase is effective in reduci ng the amount of tungsten used and improves mechanical pro perties. Accordingly, a cemented carbide, in which this n ovel WC carbide is dispersed, is suitable as an abrasion r esistance material.

### [Example 2]

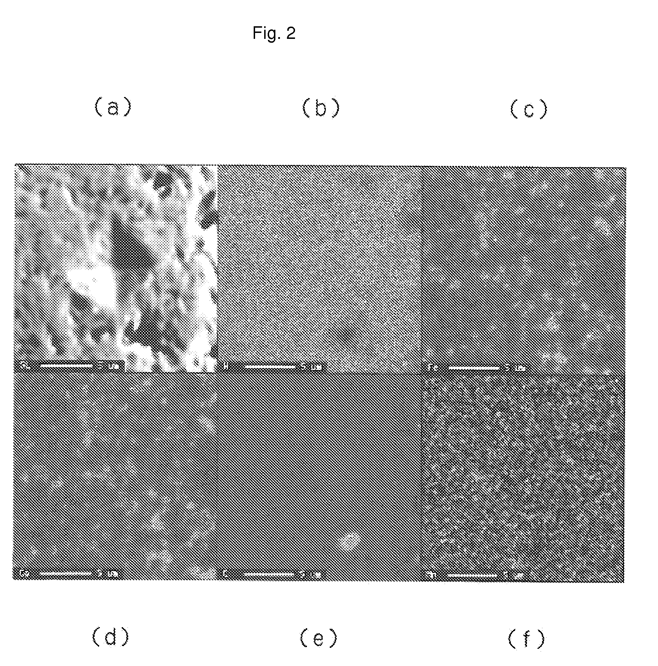

The cemented carbide may be prepared by sintering tungsten carbide of the present invention with a Co powder in accordance with a known preparation method. FIG. 2 shows an EPMA image of a cemented carbide, experimentally prepared by adding 5% by weight of bonded Co to the material of the present invention of Sample No. 33 and sintering at 1623 K at 3.6 ks. It can be seen that, in the cemented carbide, a Fe-Mn solid solution is formed in the WC skeleton and a bonded Co is partially distributed in this Fe-Mn solid solution during sintering. The Vickers hardness was an extremely high hardness of Hv1945. Further, it could be observed that a tip of a Vickers hardness test indentation did not crack and exhibited excellent toughness. That is,
(a) is an SEM image. A white part is a WC skeleton and a black part is a domain composed of a Fe-Mn solid solution. When sintered, the metal domain inevitably grows, but is maintained at 1 mm or less. This SEM image exhibits an indentation of a Vickers hardness test. The Vickers hardness was an extremely high hardness of Hv1945. Further, it can be seen that a tip of a Vickers hardness test indentation did not crack and exhibited excellent toughness.
(b) represents an X-ray image of W and shows formation of the WC skeleton. In addition, a part of W is distributed in the Fe-Mn solid solution domain.
(c) represents formation of the Fe-Mn solid solution domain, which is an X-ray image of Fe.
(d) is an X-ray image of Co. The bonded Co is partially distributed in the Fe-Mn solid solution domain during sintering.
(e) represents an X-ray image of C and shows formation of a WC skeleton.
(f) represents an X-ray image of Mn and shows formation of a Fe-Mn solid solution domain.
The reason why the WC carbide including a metal domain exhibits a high hardness is that in the present invention, the WC skeleton successfully creates a micro structure which constrains deformation of the metal domain.

### Industrial Applicability

As apparent from the foregoing, the alloy powder of the present invention contains a transition metal element homogenously compulsorily dissolved as a solid solution in a tungsten grating. Accordingly, the tungsten alloy powd er may be widely used, as an alloy powder in which a porti on of the tungsten is substituted by a transition metal el ement, for resource saving of tungsten such as tungsten ca rbide materials used for cemented carbides.
Accordingly, the inventive a transition metal included tung sten carbide can be used to make a new cemented carbide sintered with a combined phase Co in a substitute of the con ventional cemented carbide. The inventive tungsten carbide phase including metal phase has a property of toughness as itself, resulting in improved mechanical property of carbid e diffused cemented carbide, which provides a long life mold materials. Furthermore, a tungsten carbide sintered body including a metal phase can be also suitable for a new cemented carbide.

### Brief Description of Drawings

[FIG. 1] FIG.1 is an image illustrating EPMA observation results of tungsten carbide including a metal phase, for the material of the present invention of Sample No. 23. (a) is an SEM image in which a white part represents a WC skeleton and a black part represents a domain composed of a Co metal. (b) represents an X-ray image of W and shows formation of a WC skeleton. (c) represents an X-ray image of Co and shows formation of a Co domain in a WC skeleton. (d) represents an X-ray image of C and shows formation of a WC skeleton.
[FIG. 2] FIG.2 is an image illustrating EPMA observa tion results of tungsten carbide including a metal phase, for the material of the present invention of Sample No.33:
   (a) is an SEM image in which a white part is a WC skeleton and a black part is a domain composed of a Fe-Mn solid solution.
   (b) represents an X-ray image of W and shows formation of a WC skeleton.
   (c) represents an X-ray image of Fe and shows formation of a Fe- Mn solid solution domain.
   (d) is an X-ray image of Co
      in which the bonded Co is partially distributed in the Fe-Mn solid solution domain during sintering.
   (e) represents an X-ray image of C
      and shows formation of a WC skeleton.
   (f) represents an X-ray image of Mn
      and shows formation of a Fe-Mn solid solution domain.

## Claims

1. A tungsten alloy carbide with a transition metal dissolved therein as a solid solution represented by Formula [1] in which at least one transition metal element selected from the group consisting of cobalt, iron, manganese and nickel is dissolved in a tungsten grating and a peak derived from a bcc tungsten phase appears in an X-ray diffraction diagram.
Formula [1]: M-W-C
wherein M represents one or more selected from Co, Fe, Mn and Ni.

2. The tungsten alloy carbide with a transition metal dissolved therein as a solid solution according to claim 1, which has a composition of Co:0.3 - 19.7wt%, W:75.3 -93.6 wt o, C:4.9 - 6.2 wt o and a solid solution phase of
Co-W-C is included therein.

3. The tungsten alloy carbide with a transition metal dissolved therein as a solid solution according to claim 1, in which all or a part of cobalt can be substituted by one or more selected from the group consisting of iron, mangane se and nickel.

4. The tungsten alloy carbide with a transition metal dissolved therein as a solid solution according to claim 1, which has a composition of Fe:0.3 - 19.7wt%, W:75.3 -93.6 wt o, C:4.9 - 6.2 wt o and a solid solution phase of
Fe-W-C is included therein.

5. The tungsten alloy carbide with a transition metal dissolved therein as a solid solution according to claim 4, in which all or a part of iron can be substituted by one or more selected from the group consisting of iron, mangane se and nickel.

6. The tungsten alloy carbide with a transition metal dissolved therein as a solid solution according to claim 1, which has a composition of Ni:0.3 - 19.7wt%, W:75.3 -93.6 wt o, C:4.9 - 6.2 wt o and a solid solution phase of
Fe-W-C is included therein.

7. The tungsten alloy carbide with a transition metal dissolved therein as a solid solution according to claim 7, in which all or a part of iron can be substituted by one or more selected from the group consisting of iron, mangane se and nickel.

8. The tungsten alloy carbide with a transition metal dissolved therein as a solid solution according to claim 1, which has a composition of Mn:0.3 - 19.7wt%, W:75.3 -93.6 wt o, C:4.9 - 6.2 wt o and a solid solution phase of
Mn-W-C is included therein.

9. The tungsten alloy carbide with a transition metal dissolved therein as a solid solution according to claim 8, in which all or a part of manganese can be substituted by on e or more selected from the group consisting of iron, cobalt and nickel.

10. a tungsten carbide diffused cemented carbide obtained by sintering a tungsten alloy carbide powder represented by Formula [1] which is carbonized from a tungsten alloy powder with a transition metal
as a solid solution represented by Formula [2] wherein at least one transition metal element selected from the group consisting of cobalt, iron, manganese and nickel is dissolved in a tungsten grating and a peak derived f rom a bcc tungsten phase appears in an X-ray diffraction diagram.
Formula [1]: M-W-C
wherein M represents one or more selected from Co, Fe, Mn and Ni.
Formula [2]: M-W
wherein M represents one or more selected from Co, Fe, Mn and Ni.

11. The tungsten carbide diffused cemented carbide accord ing to claim 10, which comprises Co-W-C as a transition meta 1 included tungsten carbide and Co as a binder metal, having composition of which is Co:1.2 - 31.7wt%, W: 64.0 -92.7 t%, C:4.2 - 6.1wt%.

12. The tungsten carbide diffused cemented carbide accord ing to claim 11, wherein cobalt of Co-W-C can be partially s ubstituted by one or more elements selected from the group c onsisting of iron, nickel and manganese.

13. The tungsten carbide diffused cemented carbide accord ing to claim 12, which comprises Fe-W-C as a transition meta 1 included tungsten carbide and Co as a binder metal, having a composition of Co:0.2 - 12.0wit%, Fe:0.3 - 19. 7wt%, W: 64.0 cato, C:4.2 - 6.1wit%.

14. The tungsten carbide diffused cemented carbide accord ing to claim 13, wherein iron of Fe-W-C can be partially sub stituted by one or more elements selected from the group con sisting of cobalt, nickel and manganese.

15. The tungsten carbide diffused cemented carbide accodi ng to claim 12, which comprises Ni-W-C as a transition metal included tungsten carbide and Co as a binder metal, having a composition of Co:0.9 - 12.0wt%, Ni:0.3 - 19.7wt%, W: 64.0 cato, C:4.2 - 6.1wit%.

16. The tungsten carbide diffused cemented carbide accord ing to claim 15, wherein nickel of Ni-W-C can be partially s ubstituted by one or more elements selected from the group c onsisting of iron, cobalt and manganese.

17. The tungsten carbide diffused cemented carbide accodi ng to claim 12, which comprises Mn-W-C as a transition metal included tungsten carbide and Co as a binder metal, having a composition of Co:0.9 - 12.0wt%, Mn:0.3 - 19.7wt%, W: 64.0 cato, C:4.2 - 6.1wt%.

18. The tungsten carbide diffused cemented carbide accord ing to claim 11, wherein manganese of Mn-W-C can be partiall y substituted by one or more elements selected from the grou p consisting of iron, nickel and cobalt.

19. The tungsten carbide diffused cemented carbide accord ing to either one of claims 11 to 18, wherein the transition metal Co powder can be totally or partially substituted by one or more selected from the group consisting of Ni, Fe and Mn, each of the

20. A process for producing the transition metal dissolved tungsten carbide, which comprises:
mixing an aqueous solution containing tungsten ions with a n aqueous solution containing at least ions of one transit ion metal selected from the group consisting of cobalt, ir on, manganese and nickel, wherein the mixing is performed such that the tungsten ions are 60 to 90 mol% and the transition metal ions are 40 to 10 mol%,
drying the mixed aqueous solution by distillation or spraying,
thermally decomposing the resulting solid,
followed by hydrogen thermal reduction, to prepare a transition metal-dissolved tungsten alloy powder represented by Formula [2] of M-W wherein M represents one or more selected from Co, Fe, Mn and Ni,
carbonizing the resulting oxide powder or transition metal-dissolved tungsten alloy powder by heating it with graphite to be mixed or gas-carburizing, to obtain a transition meta 1 dissolved tungsten carbide.

21. A process for producing the transition metal dissolved tungsten carbide diffused cemented carbide, which comprises:
mixing an aqueous solution containing tungsten ions with a n aqueous solution containing at least ions of one transit ion metal selected from the group consisting of cobalt, ir on, manganese and nickel, wherein the mixing is performed such that the tungsten ions are 60 to 90 mol% and
the transition metal ions are 40 to 10 mol%,
drying the mixed aqueous solution by distillation or
spraying,
thermally decomposing the resulting solid,
followed by hydrogen thermal reduction, to prepare a transition metal-dissolved tungsten alloy powder represented by Formula [2] of M-W wherein M represents one or more selected from Co, Fe, Mn and Ni,
carbonizing the resulting oxide powder or transition metal-dissolved tungsten alloy powder by heating it with graphite to be mixed or gas-carburizing, to obtain a transition meta 1 dissolved tungsten carbide and
sintering the resulting tungsten carbide with a transition metal powder.
